# EUROPEAN PATENT APPLICATION

(11) **EP 2 351 667 A2**
(43) Date of publication of application: **03.08.2011**
(21) Application number: 09824949.3
(22) Date of filing: 26.10.2009
(51) Int. Cl.: B60Q 11/00

(54) **WARNING DEVICE FOR AUTOMOBILE ALTERNATOR REPLACEMENT**

(30) Priority: 07.11.2008 KR 20080110371
(71) Applicant: Jin, Ki Ho, Jeollabuk-do 573-874 (KR)
(72) Inventor: Jin, Ki Ho, Jeollabuk-do 573-874 (KR)
(74) Representative: Raimondi, Adriana
(86) International application number: PCT/KR2009/006187
(87) International publication number: WO 2010/053266

(57) **Abstract**

Provided is a warning device for automobile alternator replacement which warns a driver of the replacement timing of an automobile alternator in advance. A conducting sensor that surrounds a conductor with an insulator is embedded into a brush so that the conducting sensor can be electrically conducted before the brush reaches its wear limit. A push switch is installed between the brush and a brush holder so that the push switch can be turned on before the brush reaches its wear limit. The conducting sensor or the push switch is connected to a warning unit so that the warning unit can be operated when the conducting sensor is electrically conducted or when the push switch is turned on. Thereby, the warning device can warn the driver to replace the alternator before the alternator becomes inoperable due to the wear of the brush.

## Description

### [Technical Field]

The present invention relates to a warning device for automobile alternator replacement, which warns a driver of the replacement timing of an automobile alternator in advance, and more particularly, to a warning device for automobile alternator replacement, in which a conducting sensor that surrounds a conductor with an insulator is embedded into a brush so that the conducting sensor can be electrically conducted before the brush reaches its wear limit, a push switch is installed between the brush and a brush holder so that the push switch can be turned on before the brush reaches its wear limit, and the conducting sensor or the push switch is connected to a warning unit so that the warning unit can be operated when the conducting sensor is electrically conducted or when the push switch is turned on, thereby warning the driver to replace the alternator before the alternator becomes inoperable due to the wear of the brush.

### [Background Art]

Automobiles are each equipped with a variety of electrically powered devices such as a lighting device, an ignition device, a motor, and a control device. Further, to supply electric power to these devices, the automobile is equipped with an alternator, i.e. a device that converts a rotational force, i.e. mechanical energy supplied from an engine, to electrical energy.

Such an alternator is made up of a stator, a rotor, brushes, and so forth. Among them, the brush is a component that is in slip contact with a part of a slip ring installed on the shaft of a rotor rotated when the alternator operates. Due to this slip characteristic, the brush undergoes wear. When the wear of the brush reaches a predetermined limit, the alternator no longer operates. As such, the brush is one of the components that determine a service life of the alternator.

When the brush is worn down to a predetermined level while an automobile is traveling, the alternator can no longer produce electric power, and thus the automobile cannot travel and a driver may encounter dangerous or troublesome situations.

Thus, it is necessary to warn the driver of the wear of the brush in advance so that the driver can respond accordingly. The related art is disclosed in Korean Patent No. 10-0411164, entitled "Brush Wear Alarming Device for Vehicle Alternator."

However, since the brush wear alarming device for a vehicle alternator operates only when the alternator no longer operates due to the wear of brushes, it is impossible to respond in advance before the alternator becomes inoperable. Further, the brush wear alarming device cannot be easily installed in the alternator because a structure for sensing the wear is complicated.

### [Disclosure]

### [Technical Problem]

Accordingly, the present invention has been made keeping in mind the above problems occurring in the related art, and an objective of the present invention is to provide a warning device for automobile alternator replacement, capable of giving a driver a warning to replace an alternator in advance using a conducting sensor or a push switch before the alternator becomes inoperable due to wear of a brush.

Further, another objective of the present invention is to provide a warning device for automobile alternator replacement, in which a conducting sensor or a push switch conducted electrically or turned on depending on an amount of wear of a brush is installed in the brush or a brush holder, so that the warning device can be easily installed on an existing automobile alternator.

### [Technical Solution]

According to one aspect, there is provided a warning device for automobile alternator replacement which is installed on an alternator having a shaft on which at least one slip ring is installed and at least one brush installed in a brush holder. The warning device includes: the brush having a wear limit line setting a critical operating condition of the alternator; at least one conducting sensor installed in the brush and including a conductor installed so that a leading end thereof is located below the wear limit line at a predetermined depth and an insulator case of a cylindrical shape which insulates the conductor; and a warning unit connected to the conducting sensor at one end thereof and a battery at the other end thereof, and configured to generate a warning signal when the conductor of the conducting sensor comes in contact with the slip ring due to wear of the brush.

According to another aspect, there is provided a warning device for automobile alternator replacement which is installed on an alternator having a shaft on which at least one slip ring is installed and at least one brush installed in a brush holder. The warning device includes: the brush having a wear limit line setting a critical operating condition of the alternator; at least one case installed on the brush, and including an elastic body in an upper portion thereof and a movable member pushing the brush by the aid of the elastic body; at least one push switch turned on by a head of the movable member, and installed below the case so that an initial setting distance from a position of the head of the movable member to a position where the push switch is pushed and turned on by the head is set so as to be smaller than a length from a leading end of the brush to the wear limit line of the brush by a predetermined amount; a ground wire connected to one end of the push switch; and a warning unit connected to the push switch at one end thereof and a battery at the other end thereof, and configured to generate a warning signal when the head of the movable member pushes and turns on the push switch due to wear of the brush.

### [Advantageous Effects]

As described above, a warning device for automobile alternator replacement has a simple structure for sensing the wear of a brush, so that it can be easily installed.

Further, when the alternator becomes inoperable due to wear of the brush, a steering system and a braking system are not smoothly operated, and an electrical system including an emergency lamp does not operate. The warning device can warn a driver to replace the alternator prior to encountering this situation, so that it is possible to compel the driver to replace the alternator in advance, and thus to prevent a traffic accident. Further, it is possible to prevent temporal and economical losses caused by towing when the automobile is stopped while driving, and the driver can drive the automobile without anxiety about a failure of the alternator caused by the wear of the brush.

### [Description of Drawings]

FIG. 1 illustrates the configuration of a warning device for automobile alternator replacement according to an embodiment of the present invention.
FIG. 2 illustrates the configuration of a warning device for automobile alternator replacement according to another embodiment of the present invention.

### [Mode for Invention]

The present invention will now be described more fully hereinafter with reference to the accompanying drawings, in which exemplary embodiments of the invention are shown.

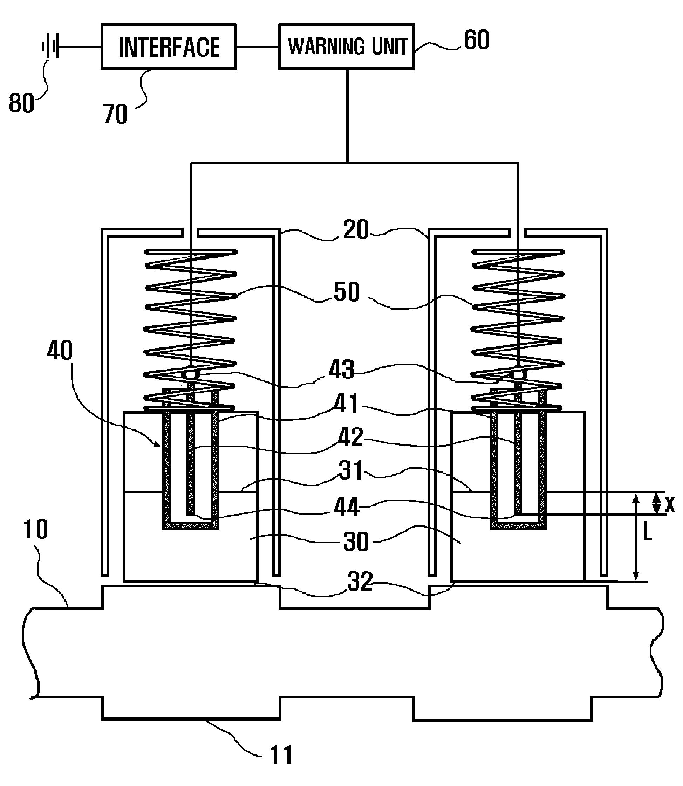

FIG. 1 illustrates a warning device for automobile alternator replacement according to an embodiment of the present invention. The warning device for automobile alternator replacement includes: a shaft 10 on which at least one slip ring 11 is installed; at least one brush 30 that contacts the slip ring 11 to induce electric current and has a wear limit line 31 setting a critical operating condition of an alternator; at least one brush holder 20 in which the brush 30 is housed; at least one elastic body 50 such as a spring that is installed in an upper portion of the brush holder 20 and brings the brush 30 in contact with the slip ring 11; at least one conducting sensor 40 that includes an insulator case 41 made of an insulator that is embedded in the brush 30 to a predetermined depth from an upper end of the brush 30 and has the shape of a cylinder, and a conductor 42 housed in the insulator case 41; and a warning unit 70 that is connected to the conductor 42 of the conducting sensor 40 at one end thereof and to a battery 80 at the other end thereof.

Here, the conducting sensor 40 is installed in the brush 30, for which the wear limit line 31 is set, so as to have a depth X from the set wear limit line 31 to a leading end of the conductor 42 which is located below the set wear limit line 31. The depth X from the wear limit line 31 to the leading end of the conductor 42 of the conducting sensor 40 is preferably set so as to operate the warning unit 70 when the mileage of an automobile is left within a range of 500 km to 1500 km. For example, when the warning unit 70 needs to be operated with the mileage of 1000 km left until the brush is worn down to the wear limit line, the depth X from the wear limit line 31 to the leading end of the conductor 42 of the conducting sensor 40 can be determined by a proportional expression as follows: a length L (mm) from a leading end 32 of the brush 30 to the wear limit line 31 versus a mileage (km) of the automobile which it takes the brush 30 to be worn down to the wear limit line = depth X (mm) versus 1000 (km).

Further, if one brush is installed, one conducting sensor 40 is embedded in the brush 30 and is connected in series to the warning unit 70 connected to the battery 80. When two or more brushes are installed, two or more conducting sensors are embedded in the respective brushes and are connected in parallel to the warning unit. Here, the conductor 42 of each conducting sensor 40 has a wire connector 43 connected to the warning unit 70 at an outer end thereof, thereby facilitating connection with an electric wire.

Further, the warning unit 70 generates a visual and/or aural warning signal, and thus may include at least one of a lamp, a light emitting diode, a buzzer, and so forth.

In addition, an interface 60 such as a relay or an electronic control unit (ECU) may be further installed between the warning unit 70 and the conducting sensor 40, and is activated to continuously operate the warning unit when electrically conducted a first time by the conducting sensor 40. Thus, even if the conductor of the conducting sensor is not in continuous contact with the slip ring despite the wear of the brush, the warning signal can be continuously generated after the first conduction.

The conducting sensor 40 and the warning unit 70 are configured so that the warning unit 70 does not operate until the conducting sensor 40, which is embedded in the brush by a predetermined depth X below the wear limit line 31 of the brush, comes in contact with the slip ring 11. Afterward, the brush 30 is worn down to approach the wear limit line 31 due to continuous use of the automobile, and thus the insulator case 41 of the conducting sensor 40 embedded in the brush 30 is worn down from the bottom thereof along with the wear of the brush 30. As the insulator case 41 is worn down, the conductor 42 inside the insulator case 41 comes in contact with the slip ring 11 installed on the shaft 10, so that the conducting sensor 40 is electrically conducted by the shaft 10 that has been previously grounded, and thus the warning unit 70 operates.

Further, when a relay is used as the interface 60 installed between the conducting sensor 40 and the warning unit 70, if the conductor 42 comes in contact with the slip ring 11, electric current flows from the battery 80 to the relay to operate the relay. Thereby, the warning unit 70 operates continuously regardless of the continuous contact between the conductor and the slip ring.

Further, when an ECU is used as the interface 60, if the brush 30 is worn down and thus the leading end 44 of the conductor 42 comes in contact with the slip ring 11, the ECU connected to the battery recognizes the contact and continuously operates the warning unit 70. In this way, even when the contact and noncontact between the conductor 42 of the conducting sensor 40 and the slip ring 11 are repeated after the first contact, the interface 60 causes the warning unit 70 to operate continuously after the first operation without being repetitively tuned on and off.

Since the conducting sensor 40 is embedded in the brush 30 and then is installed on the brush holder 20, it can be easily installed on the automobile alternator.

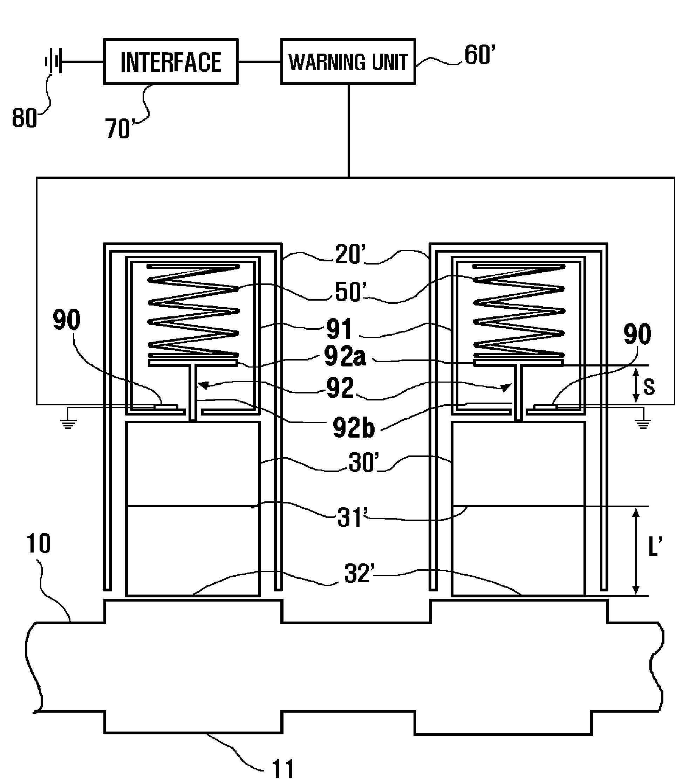

Next, FIG. 2 illustrates a warning device for automobile alternator replacement according to another embodiment of the present invention. The warning device for automobile alternator replacement includes: a shaft 10 on which at least one slip ring 11 is installed; at least one brush 30' that contacts the slip ring 11 and has a wear limit line 31' setting a critical operating condition of an alternator; at least one brush holder 20' in which the brush 30 is housed; at least one case 91 that is installed between an inner upper end of the brush holder and an upper end of the brush 30' and has a hole in the bottom thereof; at least one elastic body 50' such as a spring that is installed in an upper portion of the case 91; at least one movable member 92 that is installed under the elastic body 50', transmits pressure applied by the elastic body 50' to the brush, and brings the brush 30' in contact with the slip ring 11; at least one push switch 90 that is pushed and turned on by the movable member 92 in a normal open state; and a warning unit 70' that is connected to the push switch 90 at one end thereof and to a battery 80 at the other end thereof. Here, the movable member 92 is made up of a head 92a supporting the elastic body 50' and a stem 92b transmitting the pressure of the elastic body 50' to the brush 30'.

The push switch 90 may be installed on only one brush 30' and connected to the warning unit 70'. The push switches 90 may be installed on the respective brushes and connected in parallel to the warning unit 70'.

An initial setting distance S from the head 92a of the movable member 92, which turns on the push switch 90 configured as described above, to the push switch 90 is set so as to be smaller than a length L' from a leading end 32' to the wear limit line 31' of the brush 30' by a predetermined amount X' in order to operate the warning unit 70' before the brush 30' is worn down to the wear limit line 31'. The predetermined amount X' is preferably set so as to operate the warning unit 70' when the mileage of an automobile is left within a range of 500 km to 1500 km before the brush 30' is worn down to the wear limit line. For example, when the warning unit 70' is operated with a mileage of 1000 km left until the brush is worn down to the wear limit line, the predetermined amount X' can be determined by a proportional expression as follows: a length L' (mm) from a leading end 32' of the brush 30' to the wear limit line 31' versus a mileage (km) of the automobile which it takes the brush 30 to be worn down to the wear limit line 31' = predetermined amount X' (mm) versus 1000 (km).

The elastic body 50' continues to apply pressure to the movable member 92 so that the brush 30' can be worn down to the wear limit line 31' even after the movable member 92 comes in contact with the push switch 90

Further, the warning unit 70' generates a visual and/or aural warning signal, and thus may include at least one of a lamp, a light emitting diode, a buzzer, and so forth.

In addition, an interface 60' such as a relay or an ECU may be further installed between the warning unit 70' and the push switch 90, and is activated to continuously operate the warning unit when electrically conducted a first time by the push switch 90 contacting the head 92a of the movable member 92. Thus, even if the conductor of the conducting sensor is not in continuous contact with the slip ring 11 despite the wear of the brush, the warning signal can be continuously generated after the first conduction.

In the automobile alternator having the warning unit configured as described above, as the brush 30' is worn down, the stem 92b of the movable member 92 moves downward, and thus the head 92a of the movable member 92 pushes the push switch 90. Thereby, when the push switch 90 is turned on, the warning unit 70' connected to the battery 80 is operated. Here, the push switch 90 is repetitively turned on and off by vibration of the automobile, and thus the warning unit 70' is repetitively turned on and off. To prevent this phenomenon, the interface 60' is installed.

Further, when a relay is used as the interface 60' installed between the push switch 90 and the warning unit 70', the push switch 90 is turned on, and thus electric current flows from the battery 80 to the relay, so that the relay is operated. Thereby, the warning unit 70' operates continuously regardless of the continuous contact between the push switch 90 and the head 92a.

Further, when an ECU is used as the interface 60', if the brush 30' is worn down and thus the push switch 90 is pushed and contacted by the head 92a of the movable member 92, the ECU connected to the battery 80 recognizes the pushing to continuously operate the warning unit 70'. In this way, even when the contact and noncontact between the push switch 90 and the head 92a are repeated after the push switch 90 is pushed a first time by the head 92a, the interface 60' causes the warning unit 70' to be continuously operated after the first operation without being repetitively tuned on and off.

Exemplary embodiments of the present invention have been disclosed herein and, although specific terms are employed, they are used and are to be interpreted in a generic and descriptive sense only and not for purpose of limitation. Accordingly, it will be understood by those of ordinary skill in the art that various changes in form and details may be made without departing from the spirit and scope of the present invention as set forth in the following claims.

## Claims

1. A warning device for automobile alternator replacement which is installed on an alternator having a shaft on which at least one slip ring is installed and at least one brush installed in a brush holder, the warning device comprising:
the brush having a wear limit line setting a critical operating condition of the alternator;
at least one conducting sensor installed in the brush and including a conductor installed so that a leading end thereof is located below the wear limit line at a predetermined depth and an insulator case of a cylindrical shape which insulates the conductor; and
a warning unit connected to the conducting sensor at one end thereof and a battery at the other end thereof, and configured to generate a warning signal when the conductor of the conducting sensor comes in contact with the slip ring due to wear of the brush.

2. The warning device according to claim 1, further comprising an interface connected in series between the conducting sensor and the warning unit, and supplied with electric power from the battery to continuously operate the warning unit after the conductor of the conducting sensor comes in contact with the slip ring.

3. The warning device according to claim 2, wherein the interface includes one of a relay and an electronic control unit (ECU).

4. The warning device according to claim 1, wherein, when the alternator has two or more brushes, the conducting sensors are embedded in the respective brushes, and connected in parallel to the warning unit.

5. A warning device for automobile alternator replacement which is installed on an alternator having a shaft on which at least one slip ring is installed and at least one brush installed in a brush holder, the warning device comprising:
the brush having a wear limit line setting a critical operating condition of the alternator;
at least one case installed on the brush, and including an elastic body in an upper portion thereof and a movable member pushing the brush by the aid of the elastic body;
at least one push switch turned on by a head of the movable member, and installed below the case so that an initial setting distance from a position of the head of the movable member to a position where the push switch is pushed and turned on by the head is set so as to be smaller than a length from a leading end of the brush to the wear limit line of the brush by a predetermined amount;
a ground wire connected to one end of the push switch; and
a warning unit connected to the push switch at one end thereof and a battery at the other end thereof, and configured to generate a warning signal when the head of the movable member pushes and turns on the push switch due to wear of the brush.

6. The warning device according to claim 5, further comprising an interface connected in series between the push switch and the warning unit, and supplied with electric power from the battery to continuously operate the warning unit after the movable member pushes and contacts the push switch.

7. The warning device according to claim 6, wherein the interface includes one of a relay and an electronic control unit (ECU).

8. The warning device according to any one of claims 1 and 5, wherein the warning unit includes at least one of a lamp, a light emitting diode, and a buzzer.

9. The warning device according to claim 5, wherein when the alternator has two or more brushes, the push switches are installed on the respective brushes, and connected in parallel to the warning unit.
